# EUROPÄISCHE PATENTSCHRIFT

(11) **EP 2 525 972 B1**
(45) Veröffentlichungstag und Bekanntmachung des Hinweises auf die Patenterteilung: **02.11.2016**
(21) Anmeldenummer: 11700365.7
(22) Anmeldetag: 19.01.2011
(51) Int. Cl.: B32B 15/08, B32B 27/08, C08J 5/18, C08J 7/04, C09D 183/02, H04N 7/00

(54) **FLAMMGESCHÜTZTE ARTIKEL MIT HOHER TRANSMISSION**
FLAME-PROTECTED ARTICLE HAVING A HIGH LEVEL OF TRANSMISSION
ARTICLES IGNIFUGÉS À HAUT NIVEAU DE TRANSMISSION

(30) Priorität: 22.01.2010 DE 102010005417
(43) Veröffentlichungstag der Anmeldung: 28.11.2012
(73) Patentinhaber: Covestro Deutschland AG, 51373 Leverkusen (DE)
(72) Erfinder: KRAUTER, Berit, 51379 Leverkusen (DE); HILDENBRAND, Karlheinz, 88969 Owingen (DE); BUCKEL, Frank, 47906 Kempen (DE); CAPELLEN, Peter, 47803 Krefeld (DE); HAHN, Rüdiger, 51399 Burscheid (DE); MÜLLER, Andreas, 51061 Köln (DE); SCHWECKE, Constantin, 53347 Alfter (DE)
(74) Vertreter: Levpat
(86) Internationale Anmeldenummer: PCT/EP2011/050647
(87) Internationale Veröffentlichungsnummer: WO 2011/089138

(56) Entgegenhaltungen:
- EP-A2- 0 682 083
- DE-A1-102008 010 752
- JP-A- 2004 083 753
- US-B1- 6 602 938

## Beschreibung

Die Erfindung betrifft beschichtete Artikel, enthaltend ein Substrat (S) aus einem transparenten, Flammschutzmittel enthaltenden thermoplastischen Polymer, sowie einseitig oder beidseitig eine Silika-enthaltende Kratzfestbeschichtung (K) und optional eine oder mehrere Polyelektrolyt-(Multi)schichten (P). Die Erfindung betrifft außerdem die Herstellung solcher beschichteter Artikel und deren Verwendung, insbesondere zur Herstellung von Flachbildschirmen und Verscheibungen sowie daraus erhältliche Flachbildschirme und Verscheibungen .

Der Ausdruck "Bildschirm" beschreibt in der vorliegenden Anmeldung die Vorderfront eines Monitors beinhaltend die sogenannte Bildfläche, d.h. eine transparente Frontscheibe zur Wiedergabe des Bildes, und optional einen umlaufenden Rahmen aus einem vorzugsweise nicht transparenten Material. Zumeist handelt es sich bei den Bildschirmen heute um Flachbildschirme.

Der Markt der Flachbildfernseher ist in den letzten Jahren stark gewachsen. Treiber dieses Wachstums war neben der fortschreitenden Flachbildtechnologie insbesondere die starke Fokussierung der Hersteller auf ein innovatives TV-Design. Innovative Designs konnten u.a. durch die Nutzung von Kunststoffen als Gehäusematerial des TV-Gerätes verwirklicht werden. So konnte z.B. in den letzten Jahren der verstärkte Einbau von schwarzen, hochglänzenden TV-Frontrahmen beobachtet werden. Für den Kunststoffeinsatz bevorzugte Gehäuseteile waren in den letzten Jahren Frontrahmen und TV-Rückseiten.

Im Inneren des Fernsehers besteht die Herausforderung unter anderem darin, möglichst das gesamte erzeugte Licht durch die Mattscheibe des TV-Geräts nach vorne auszugeben. Hier wurden in den letzten Jahren verstärkte Anforderungen an die Kunststoffteile im Inneren eines TV-Gerätes gestellt.

Gleichzeitig mit dem starken Wachstum des Flachbildfernseher-Marktes steigen die Sicherheitsbestimmungen für solche TV-Geräte. So schreibt die EN 60065 mit Verweis auf die CLC/TS 62441 ab Juli 2010 vor, dass Flachbildfernseher in der Europäischen Union Mindeststandards an den Flammschutz der verwendeten Gehäusematerialien erfüllen müssen. Der Bedarf an einem verbesserten Flammschutz kombiniert mit hohen und immer neuen Anforderungen an das Design lässt einen Bedarf an neuen Konzepten für die Herstellung von TV-Gehäuseteilen erforderlich werden. So kann es eine Option sein, das Design durch den weiter verstärkten Einsatz von Kunststoffen, z.B. in der Mattscheibe, die bisher meist aus Glas gefertigt wird, unter Berücksichtigung von Materialeigenschaften wie Transparenz, Transmission und Flammschutz weiter zu verändern. Für einen ökonomischen Herstellprozess ist von großem Interesse, für Rahmen und Bildfläche (screen) des Bildschirms die gleiche Substratschicht zu nutzen. Dies bedeutet, dass das eingesetzte Material sowohl die an den Rahmen als auch die an die Bildfläche gestellten Forderungen insbesondere hinsichtlich Abriebsfestigkeit, Transmission, Flammfestigkeit und Viskosität erfüllen muss.

Unbeschichtete Substrate erfüllen die Anforderungen für einen Einsatz für Bildschirme, insbesondere Flachbildschirme aus mehreren Gründen nicht zufriedenstellend. Zum einen sind die Abriebwerte, beispielsweise hinsichtlich Reinigung, zu gering, und zum anderen sind die Transmissionseigenschaften, insbesondere im Bereich von 550 bis 750 nm zu niedrig. Auch bei Polycarbonatscheiben, die sich generell durch relativ gute Transmissionseigenschaften von ca. 90 % im sichtbaren Bereich auszeichnen, kommt es insbesondere bei Produkten, die Additive, wie z.B. Flammschutzmittel, UV-Absorber oder Farbpigmente enthalten, im Wellenlängenbereich von 550 bis 750 nm zu einer reduzierten Transmission. Der Zusatz von konventionellen Flammschutzadditiven hat im Allgemeinen auf Thermoplaste einen negativen Einfluss auf die Transparenz, d.h. er wirkt transmissionssenkend. Ein Weg, wie sich die Transmission im gesamten Bereich des sichtbaren Spektrums erhöhen ließe, wäre deshalb von erheblichem Interesse.

Schließlich sind für den Einsatz beispielsweise im Elektro- oder Elektronik-Sektor (E/E) erhöhte Flammschutzeigenschaften gefordert, die von vielen konventionellen thermoplastischen Polymeren bei geringen Wandstärken nur unzureichend erfüllt werden können, wenn gleichzeitig ein gutes mechanisches Eigenschaftsprofil erhalten werden soll.

Darüber hinaus sind aus produktionstechnischen Gründen insbesondere leicht fließende Thermoplasten, die relativ hohe MVR Werte aufweisen, von Interesse.

In DE 2947 823 A1 und DE 10 2008 010 752 A1 sind kratzfeste Beschichtungen für Polycarbonat-Substrate beschrieben. Flammschutzmittel werden nicht erwähnt.

WO 2008/091131 A1 beschreibt dass Beschichtungs-Zusammensetzumngen aus Wasserglas, SiO₂ und Silanen eine Flammschutzwirkung aufweisen, die beschichteten Artikel der vorliegenden Anmeldung werden jedoch nicht beschrieben.

US 2006/0100359 und JP 2003-128917 beschreiben Beschichtungszusammensetzungen, die eine flammschützende Wirkung uafweisen. Beschichtete Artikel gemäß der vorleigenden Anmedlung werden nicht beschrieben.

Bisher bietet der Stand der Technik noch keine Lösung, die das Eigenschaftsprofil, wie es z.B. für einen Einsatz sowohl im Rahmen und der Bildfläche eines Bildschirms gefordert wird, bei Artikeln enthaltend nur eine Substratschicht befriedigt werden kann.

Überraschenderweise wurde nun gefunden, dass Substrate, beispielweise Platten, Scheiben oder Folien, aus flammgeschützten transparenten thermoplastischen Kunststoffen, nach Ausrüstung mit silikahaltigen Beschichtungen nicht nur hervorragende Abrieb- bzw. Kratzbeständigkeit aufweisen, sondern auch deutlich verbesserte Flammschutzeigenschaften und Transmissionseigenschaften aufweisen.

Die erfindungsgemäßen Artikel, enthaltend a) ein Substrat (S) mit einer Transmission > 75 %, gemessen nach ASTM E 1348 bei 3 mm Schichtdicke und einer Wellenlänge von 550 nm umfassend eine Substratschicht bestehend aus einem thermoplastischen Polymer enthaltend ein als Flammschutzmittel mindestens eines aus der Gruppe der Alkali- bzw. Erdalkalisalzen von aliphatischen bzw. aromatischen Sulfonsäure- Sulfonamid- und Sulfonimidderivaten und phosphorhaltigen Flammschutzmittel sowie gegebenenfalls Additive ausgewählt aus mindestens einem aus der Gruppe der Füllstoffe, UV-Stabilisatoren, Thermo¬stabilisatoren, Antistatika und Pigmente, Entformungsmittel und Fließmittel , b) einseitig oder beidseitig auf dem Substrat eine Silika- enthaltende Kratzfestbeschichtung (K) und c) optional einseitig oder beidseitig Polyelektrolyt-(Multi)schichten (P), stellen somit für die zuvor geschilderte Problemstellung eine einfach herzustellende und flexible Lösung dar.

Der Ausdruck "einseitig" umfasst einerseits, dass eine Seite des Substrats (im allgemeinen die Vorderseite) eine Silika-enthaltende Kratzfestbeschichtung aufweist und andererseits auch dass eine Seite des Substrats und die Kanten und Seitenwände des Substrats die Silika-enthaltende Kratzfestbeschichtung aufweisen.

Der Ausdruck "beidseitig" umfasst einerseits, dass beide Seiten (Oberseite- und Unterseite) bzw. Vorderseite und Rückseite) des Substrats mit einer Silika-enthaltenden Kratzfestbeschichtung beschichtet und andererseits auch dass beide Seiten des Substrats und die Kanten und Seitenwände des Substrats beschichtet sind.

Die Erfindung betrifft außerdem die Herstellung solcher Artikel und deren Verwendung, insbesondere zur Herstellung von Flachbildschirmen und für Verscheibungen sowie die daraus erhältlichen Flachbildschirme und Verscheibungen.

Die erfindungsgemäßen Artikel sind hochtransparent. "hochtransparent" bedeutet im Sinne dieser Erfindung, dass das beschichtete Polymersubstrat eine Transmission von mindestens 88%, bevorzugt von mindestens 90% und ganz besonders bevorzugt eine Transmission von 91% bis 96% im Bereich des sichtbaren Spektrums (550 bis 750 nm) aufweist, wobei die Transmissionsbestimmung nach ASTM E 1348: Standard Test Method for Transmittance and Color by Spectrophotometry Using Hemispherical Geometry erfolgt und die Dicke des Substrats ohne Beschichtung 3 mm aufweist.

Im Rahmen der vorliegenden Erfindung steht der Begriff "Silika" für ganz oder teilweise vernetze Strukturen auf Siliciumdioxid (SiO₂)- Basis. Er umfasst insbesondere sowohl Sol-Gel Systeme als auch Silika-Nanopartikel enthaltende Zusammensetzungen.

Bei den Substraten (S) handelt es sich bevorzugt um eine Substratschicht, beispielsweise um Platten, Scheiben oder Folien oder sonstige flächige Substrate, aus transparenten, bevorzugt flammwidrigen und/oder Flammschutzmittel enthaltenden thermoplastischen Polymeren. Das Substrat kann auch aus mehreren solcher Substratschichten bestehen. Die thermoplastischen Polymere sind bevorzugt ausgewählt aus einem oder mehreren Polymeren aus der Gruppe enthaltend Polycarbonate, Copolycarbonate (Copolymere enthaltend Polycarbonatbausteine), Polyacrylate, insbesondere Polymethylmethacrylat, Cycloolefincopolymere, Polyester, insbesondere Polyethylentherephthalat, Poly(styrol-co-acrylnitril) oder Mischungen dieser Polymere.

"Transparent" bedeutet im Sinne dieser Erfindung, dass das unbeschichtete Polymersubstrat eine Transmission von mindestens 75%, bevorzugt 80% und ganz besonders bevorzugt mehr als 85% im Bereich des sichtbaren Spektrums (550 bis 750 nm) aufweist, wobei die Transmissionsbestimmung nach ASTM E 1348 : Standard Test Method for Transmittance and Color by Spectrophotometry Using Hemispherical Geometry erfolgt und die Dicke des Substrats ohne Beschichtung 3 mm aufweist.

Als transparente thermoplastische Polymere werden bevorzugt Polycarbonat und/oder Polymethylmethacrylate sowie Blends enthaltend mindestens einen der beiden Thermoplasten eingesetzt. Besonders bevorzugt wird Polycarbonat eingesetzt. Polycarbonat ist als thermoplastisch verarbeitbarer Kunststoff bekannt. Die Polycarbonat-Kunststoffe sind vorwiegend aromatische Polycarbonate auf Basis von Bisphenolen. Es können lineare oder verzweigte Polycarbonate oder Mischungen aus linearen und verzweigten Polycarbonaten, vorzugsweise auf Basis von Bisphenol-A eingesetzt werden. Die in den erfindungsgemäßen Artikeln einzusetzenden linearen bzw. verzweigten Polycarbonate und Copolycarbonate haben im Allgemeinen mittlere Molekulargewichte M̅ _{w} (Gewichtsmittel) von 2 000 bis 200 000 g/mol, bevorzugt 3 000 bis 150 000 g/mol, insbesondere 5 000 bis 100 000 g/mol, ganz besonders bevorzugt 8 000 bis 80 000 g/mol, insbesondere 12 000 bis 70 000 g/mol (bestimmt mittels Gelpermeationschromatographie mit Polycarbonat-Eichung).

Sie haben in diesem Rahmen weiterhin bevorzugt mittlere Molekulargewichte mit einem Gewichtsmittel von M̅ w von 16.000 bis 40.000 g/mol.

Das eingesetzte thermoplastische Polymer, insbesondere Polycarbonat bzw. die eingesetzte Polycarbonatmischung weist bevorzugt einen MVR (Melt Volume Rate) größer oder größer gleich 10 (bei 300 °C und 1,2 kg nach ISO 1133), besonders bevorzugt einen MVR nach ISO 1133 ≥ 20 (bei 300 °C und 1,2 kg nach ISO 1133) und ganz besonders bevorzugt einen MVR ≥ 30 (bei 300 °C und 1,2 kg nach ISO 1133) auf.

Zur Herstellung von Polycarbonaten sei beispielhaft auf "Schnell", Chemistry and Physics of Polycarbonats, Polymer Reviews, Vol. 9, Interscience Publishers, New York, London, Sydney 1964, auf D.C. PREVORSEK, B.T. DEBONA and Y. KESTEN, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), auf D. Freitag, U. Grigo, P.R. Müller, N. Nouvertne, BAYER AG, "Polycarbonates" in Encyclopedia of Polymer Science and Engineering, Vol. 11, Second Edition, 1988, Seiten 648-718 und schließlich auf Dres. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen. Die Herstellung erfolgt vorzugsweise nach dem Phasengrenzflächenverfahren oder dem Schmelze-Umesterungsverfahren.

Die Polycarbonate sind durch Zusatz von ein oder mehreren Flammschutzadditiven flammfest ausgerüstet.

Neben den weiter unten beschriebenen Flammschutzmitteln können die thermoplastischen Kunststoffe weitere Additive enthalten, beispielsweise die für diese Thermoplasten üblichen Additive wie Füllstoffe, UV-Stabilisatoren, Thermostabilisatoren, Antistatika und Pigmente in den üblichen Mengen, gegebenenfalls können das Entformungsverhalten und das Fließverhalten noch durch Zusatz externer Entformungsmittel und Fließmittel verbessert werden (z. B. niedermolekulare Carbonsäureester, Kreide, Quarzmehl, Glas- und Kohlenstofffasern, Pigmente und deren Kombination). Für Polycarbonat üblicherweise verwendete Additive werden z. B. in WO 99/55772, S. 15 - 25, EP 1 308 084 und in den entsprechenden Kapiteln des "Plastics Additives Handbook", ed. Hans Zweifel, 5th Edition 2000, Hanser Publishers, Munich beschrieben.

Die Substrate (S) im Sinne der vorliegenden Erfindung können auch mehrere Schichten aus den oben genannten thermoplastischen Kunststoffen umfassen.

Die thermoplastischen Substrate lassen sich aus den thermoplastischen Kunststoffen über übliche thermoplastische Verarbeitungsverfahren herstellen, beispielweise mittels Einkomponenten - oder Mehrkomponentenspritzgießverfahren, Extrusion, Coextrusion oder Laminierung.

Die Dicke der thermoplastischen Substrate hängt von der Art der Anwendung ab. Für einen Bildschirm ist eine Dicke im Bereich von 1- 10 mm, bevorzugt 1 - 5 mm, besonders bevorzugt 2 - 3 mm üblich. In anderen Anwendungen werden auch dickere oder dünnere Substrate eingesetzt. Für Automobilverscheibungen werden bevorzugt Substratstärken von ca. 3 mm eingesetzt.

Flammschutzmittel im Sinne der vorliegenden Erfindung sind Alkali- bzw. Erdalkalisalze von aliphatischen bzw. aromatischen Sulfonsäure- Sulfonamid- und Sulfonimidderivaten z.B. Kaliumperfluorbutansulfonat, Kaliumdiphenyl-sulfonsulfonat, N-(p-tolylsulfonyl-)-p-toluolsulfimid-Kaliumsalz, N-(N'-Benzylaminocabonyl)-sulfanylimid-Kaliumsalz.

Salze die gegebenenfalls in den erfindungsgemäßen Formmassen verwendet werden können, sind beispielsweise: Natrium- oder Kaliumperfluorbutansulfat, Natrium- oder Kaliumperfluormethansulfonat, Natrium- oder Kaliumperfluoroctansulfat, Natrium-oder Kalium-2,5-dichlorbenzolsulfat, Natrium- oder Kalium-2,4,5-trichlorbenzolsulfat, Natrium- oder Kalium-methylphosphonat, Natrium- oder Kalium-(2-phenyl-ethylen)-phosphonat, Natrium- oder Kaliumpentachlorbenzoat, Natrium- oder Kalium-2,4,6-trichlorbenzoat, Natrium-oder Kalium-2,4-dichlorbenzoat, Lithium-phenylphosphonat, Natrium- oder Kalium-diphenylsulfon-sulfonat, Natrium- oder Kalium-2-formylbenzolsulfonat, Natrium- oder Kalium-(N-benzolsulfonyl)-benzolsulfonamid, Trinatrium- oder Trikalium-hexafluoroaluminat, Dinatrium- oder Dikalium-hexafluorotitanat, Dinatrium- oder Dikalium-hexafluorosilikat, Dinatrium- oder Dikalium-hexafluorozirkonat, Natrium- oder Kalium-pyrophosphat, Natrium- oder Kaliummetaphosphat, Natrium- oder Kalium-tetrafluoroborat, Natrium- oder Kalium-hexafluorophosphat, Natrium- oder Kalium- oder Lithiumphosphat, N-(p-tolylsulfonyl-)-p-toluolsulfimid-Kaliumsalz, N-(N'-Benzylaminocarbonyl)-sulfanylimid-Kaliumsalz.

Bevorzugt werden Natrium- oder Kaliumperfluorbutansulfat, Natrium- oder Kaliumperfluoroctansulfat, Natrium- oder Kalium-diphenylsulfon-sulfonat und Natrium oder Kalium-2,4,6-trichlorbenzoat und N-(p-tolylsulfonyl-)-p-toluolsulfimid-Kaliumsalz, N-(N'-Benzylaminocabonyl)-sulfanylimid-Kaliumsalz. Ganz besonders bevorzugt sind Kalium-nona-fluor-1-butansulfonat und Natrium- oder Kaliumdiphenylsulfonsulfonat. Kalium-nona-fluor-1-butansulfonat ist u.a. als Bayowet^{®}C4 (Firma Lanxess, Leverkusen, Deutschland, CAS-Nr. 29420-49-3), RM64 (Firma Miteni, Italien) oder als 3M™ Perfluorobutanesulfonyl Fluoride FC-51 (Firma 3M, USA) kommerziell erhältlich. Ebenfalls sind Mischungen der genannten Salze geeignet.

Diese organischen Flammschutzsalze werden in Mengen von 0,01 Gew% bis 1,0 Gew.-%, vorzugsweise 0,01 Gew% bis 0,8 Gew.-%, besonders bevorzugt 0,01 Gew% bis 0,6 Gew.-% jeweils bezogen auf die Gesamtzusammensetzung in den Formmassen eingesetzt.

Als weitere Flammschutzmittel kommen z.B. phosphorhaltige Flammschutzmittel ausgewählt aus den Gruppen der Mono- und oligomeren Phosphor- und Phosphonsäureester, Phosphonatamine, Phosphonate, Phosphinate, Phosphite, Hypophosphite, Phosphinoxide und Phosphazene, wobei auch Mischungen von mehreren Komponenten ausgewählt aus einer oder verschiedenen dieser Gruppen als Flammschutzmittel zum Einsatz kommen können in Frage. Auch andere hier nicht speziell erwähnte vorzugsweise halogenfreie Phosphorverbindungen können alleine oder in beliebiger Kombination mit anderen vorzugsweise halogenfreien Phosphorverbindungen eingesetzt werden. Hierzu zählen auch rein anorganische Phosphorverbindungen wie Borphosphathydrat. Des weiteren kommen als phosphorhaltige Flammschutzmittel Phosphonatamine in Betracht. Die Herstellung von Phosphonataminen ist beispielsweise in US-Patentschrift 5,844,028 beschrieben. Phosphazene und deren Herstellung sind beispielsweise in EP-A 728 811 und WO 97/40092 beschrieben. Auch können Siloxane, phosphorylierte Organosiloxane, Silicone oder Siloxysilane als Flammschutzmittel Verwendung finden, was beispielsweise in der EP 1 342 753, in der DE 10257079A sowie in der EP 1 188 792 näher beschrieben wird.

Bevorzugte Phosphorverbindungen der allgemeinen Formel (4) sind, 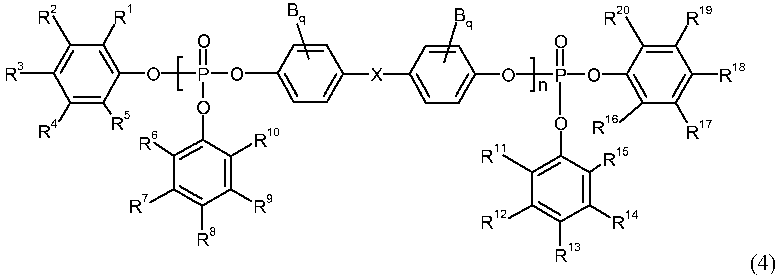 worin
R¹ bis R²⁰ unabhängig voneinander Wasserstoff, eine lineare oder verzweigte Alkylgruppe bis zu 6 C-Atomen
n einen Durchschnittswert von 0,5 bis 50 und
B jeweils C₁-C₁₂-Alkyl, vorzugsweise Methyl, oder Halogen, vorzugsweise Chlor oder Brom
q jeweils unabhängig voneinander 0, 1 oder 2,
X eine Einfachbindung, C=O, S, O, SO₂, C(CH₃)₂, C₁-C₅-Alkylen, C₂-C₅-Alkyliden, C₅-C₆-Cycloalkyliden, C₆-C₁₂-Arylen, an das weitere aromatische gegebenenfalls Heteroatome enthaltende Ringe kondensiert sein können, oder einen Rest der Formel (5) oder (6)

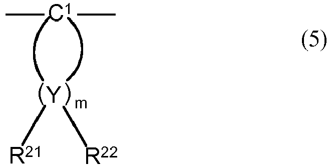

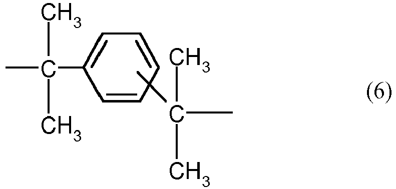

mit Y Kohlenstoff und
R²¹ und R²² für jedes Y individuell wählbar, unabhängig voneinander Wasserstoff oder C₁-C₆-Alkyl, vorzugsweise Wasserstoff, Methyl oder Ethyl,
m eine ganze Zahl von 4 bis 7, bevorzugt 4 oder 5,
mit der Maßgabe, dass an mindestens einem Atom Y R²¹ und R²² gleichzeitig Alkyl sind, bedeuten.

Insbesondere bevorzugt sind solche Phosphorverbindungen der Formel (4), in denen R1 bis R20 unabhängig voneinander Wasserstoff oder einen Methylrest bedeuten und bei denen q = 0 ist. Insbesondere bevorzugt sind Verbindungen, in denen X SO₂, O, S, C=O, C₂-C₅-Alkyliden, C₅-C₆-Cycloalkyliden oder C₆-C₁₂-Arylen bedeutet. Verbindungen mit X = C(CH₃)₂ sind ganz besonders bevorzugt.

Der Oligomerisierungsgrad n ergibt sich als Durchschnittswert aus dem Herstellverfahren der aufgeführten phosphorhaltigen Verbindungen. Der Oligomerisierungsgrad liegt hierbei in der Regel bei n <10. Bevorzugt sind Verbindungen mit n von 0,5 bis 5,0, besonders bevorzugt 0,7 bis 2,5. Ganz besonders bevorzugt sind Verbindungen, die einen hohen Anteil an Molekülen mit n = 1 zwischen 60% und 100%, bevorzugt zwischen 70 und 100 %, besonders bevorzugt zwischen 79 % und 100 % aufweisen. Herstellbedingt können die obigen Verbindungen auch geringe Mengen an Triphenylphosphat enthalten. Die Mengen an dieser Substanz liegen meist unter 5 Gew.-%, wobei im vorliegenden Zusammenhang Verbindungen bevorzugt sind, deren Triphenylphosphatgehalt im Bereich von 0 bis 5 Gew.-%, bevorzugt von 0 bis 4 % Gew.-%, besonders bevorzugt von 0,0 bis 2,5 Gew.-%, bezogen auf die Verbindung der Formel (4) liegt.

Im Rahmen der vorliegenden Erfindung werden die Phosphorverbindungen der Formel (4) in Mengen von 1 Gew.-%, bis 30 Gew.-%, bevorzugt 2 Gew.-%, bis 20 Gew.-%, besonders bevorzugt 2 Gew.-%, bis 15 Gew.-%, jeweils bezogen auf die Gesamtzusammensetzung eingesetzt.

Die genannten Phosphorverbindungen sind bekannt (vgl. z.B. EP-A 363 608, EP-A 640 655) oder lassen sich nach bekannten Methoden in analoger Weise herstellen (z.B. Ullmanns Encyklopädie der technischen Chemie, Bd. 18, S. 301 ff. 1979; Houben-Weyl, Methoden der organischen Chemie, Bd. 12/1, S. 43; Beilstein Bd. 6, S. 177).

Besonders bevorzugt ist im Rahmen der vorliegenden Erfindung Bisphenol-A-diphosphat. Bisphenol-A-diphosphat ist u.a. als Reofos^{®} BAPP (Firma Chemtura, Indianapolis, USA), NcendX^{®} P-30 (Firma Albemarle, Baton Rouge, Louisiana, USA), Fyrolflex^{®} BDP (Firma Akzo Nobel, Arnheim, Niederlande) oder CR 741^{®} (Firma Daihachi, Osaka, Japan) kommerziell erhältlich.

Die Herstellung dieser Flammschutzmittel ist z.B. auch in US-A 2002/0038044 beschrieben.

Weitere Phosphorsäureester, die im Rahmen der vorliegenden Erfindung eingesetzt werden können, sind zudem Triphenylphosphat, welches unter anderem als Reofos^{®} TPP (Firma Chemtura), Fyrolflex^{®} TPP (Firma Akzo Nobel) oder Disflamoll^{®} TP (Firma Lanxess) angeboten wird und Resorcindiphosphat. Resorcoindiphosphat läßt sich als Reofos RDP (Firma Chemtura) oder Fyrolflex^{®} RDP (Firma Akzo Nobel) käuflich erwerben.

Weitere geeignete Flammschutzmittel im Sinne der vorliegenden Erfindung sind halogenhaltige Verbindungen. Hierzu zählen bromierte Verbindungen wie bromierte Oligocarbonate (z.B. Tetrabrombisphenol-A oligocarbonat BC-52^{®}, BC-58^{®}, BC-52HP^{®} der Firma Chemtura), Polypentabrombenzylacrylate (z.B. FR 1025 der Firma Dead Sea Bromine (DSB)), oligomere Umsetzungsprodukte aus Tetrabrom-bisphenol-A mit Expoxiden (z.B. FR 2300 und 2400 der Firma DSB), oder bromierte Oligo- bzw. Polystyrole (z.B. Pyro-Chek^{®} 68PB der Firma Ferro Corporation, PDBS 80 und Firemaster^{®} PBS-64HW der Firma Chemtura).

Besonders bevorzugt sind bromierte Oligocarbonate auf Basis Bisphenol A, insbesondere Tetrabrombisphenol-A oligocarbonat.

Im Rahmen der vorliegenden Erfindung werden bromhaltige Verbindungen in Mengen von 0,1 Gew.-% bis 30,0 Gew.-%, bevorzugt 0,1 Gew.-% bis 20,0 Gew.-%, besonders bevorzugt 0,1 Gew.-% bis 10,0 Gew.-% und ganz besonders bevorzugt 0,1 Gew.-% bis 5,0 Gew.-% jeweils bezogen auf die Gesamtzusammensetzung eingesetzt.

Die thermoplastischen Polymeren für die Polymersubstrate können noch jeweils für diese Thermoplasten üblichen Additive wie Füllstoffe, UV-Stabilisatoren, Thermostabilisatoren, Antistatika und Pigmente in den üblichen Mengen zugesetzt werden; gegebenenfalls können das Entformungsverhalten, das Fließverhalten, und/oder weiterer Eigenschaften noch durch Zusatz externer Entformungsmittel, Fließmittel, und/oder anderer Additive beeinflusst werden. Als Additive geeignete Verbindungen werden z. B. in WO 99/55772, S. 15 - 25, EP 1 308 084 und in den entsprechenden Kapiteln des "Plastics Additives Handbook", ed. Hans Zweifel, 5th Edition 2000, Hanser Publishers, Munich beschrieben.

Erfindungsgemäße, flammgeschützte Polycarbonate sind beispielsweise von der Firma Bayer MaterialScience, Leverkusen unter dem Namen Makrolon^{®} 6557; Makrolon^{®} 6555, oder Makrolon^{®} 6485 kommerziell erhältlich.

Bei den Silika-haltigen Kratzfestbeschichtungen K handelt es sich um Beschichtungen erhältlich aus Formulierungen eines Silika-haltigen kratzfesten bzw. abriebsbeständigen Lackes, beispielsweise eines eines silika-haltigen Hybridlackes, wie z.B. einem Siloxanlack (Sol-Gel-Lack), durch Fluten, Tauchen, Sprühen, Aufwalzen oder Aufschleudern.

Hybridlacke im Sinne der vorliegenden Erfindung basieren auf der Verwendung von Hybridpolymeren als Bindemittel. Hybridpolymere (Hybride: lat. "von zweierlei Herkunft") sind polymere Werkstoffe, die Struktureinheiten verschiedener Materialklassen auf molekularer Ebene in sich vereinen. Durch ihren Aufbau können Hybridpolymere völlig neuartige Eigenschaftskombinationen aufweisen. Im Unterschied zu Verbundwerkstoffen (definierte Phasengrenzen, schwache Wechselwirkungen zwischen den Phasen) und Nanokompositen (Verwendung nanoskaliger Füllstoffe) sind die Struktureinheiten von Hybridpolymeren auf molekularer Ebene miteinander verknüpft. Dies gelingt durch chemische Verfahren wie z. B. den Sol-Gel-Prozess, mit dem anorganische Netzwerke aufgebaut werden können. Durch den Einsatz von organisch reaktiven Precursoren z. B. organisch modifizierten Metall-Alkoxiden können zusätzlich organische Oligomer/Polymerstrukturen erzeugt werden. Oberflächenmodifizierte Nanopartikel enthaltende Acrylatlacke, die nach der Härtung ein organisch/anorganisches Netzwerk bilden, werden ebenfalls als Hybridlack definiert. Es gibt thermisch härtbare und UV-härtbare Hybridlacke.

Sol-Gel-Lacke im Sinne der vorliegenden Erfindung sind silika-haltige Lacke, die nach dem Sol-Gel-Prozess hergestellt werden. Der Sol-Gel-Prozess ist ein Verfahren zur Synthese nichtmetallischer anorganischer oder hybridpolymerer Materialien aus kolloidalen Dispersionen, den sogenannten Solen.

Beispielsweise können solche Sol-Gel-Beschichtungslösungen durch Hydrolyse wässriger Dispersionen von kolloidem Siliziumdioxid und einem Organoalkoxysilan und/oder einem Alkoxysilan oder Mischungen aus Organoalkoxysilanen der allgemeinen Formel RSi(OR')₃ und/oder Alkoxysilanen der allgemeinen Formeln Si(OR')₄ herstellt werden, wobei in den Organoalkoxysilan(en) der allgemeinen Formel RSi(OR')₃ R für einen monovalenten C₁ bis C₆ - Alkyl-Rest oder für einen ganz oder teilweise fluorierten C₁ - C₆ - Alkylrest, für eine Vinyl- oder eine Allyl-Einheit, einen Arylrest oder für ein C₁ - C₆ Alkoxygruppe steht. Besonders bevorzugt ist R eine C₁ bis C₄-Alkylgruppe, eine Methyl-, Ethyl-, n-Propyl-, iso-Propyl-, tert.-Butyl-, sek.-Butyl- oder n-Butylgruppe, eine Vinyl-, Allyl-, Phenyl- oder substituierte Phenyleinheit. Die -OR' sind unabhängig voneinander ausgewählt aus der Gruppe enthaltend C₁ bis C₆ - Alkoxygruppen, eine Hydroxygruppe, eine Formyleinheit und eine Acetyl-Einheit. Sol-Gel-Polysiloxanlacke fallen teilweise auch unter die Definition eines Hybridlackes.

Das kolloide Siliziumdioxid ist beispielsweise als z.B. Levasil 200 A (HC Starck), Nalco 1034A (Nalco Chemical Co), Ludox AS-40 oder Ludox LS (GRACE Davison) erhältlich. Als Organoalkoxysilane seien beispielhaft folgende Verbindungen genannt: 3,3,3-Trifluoropropyltrimethoxysilan, Methyltrimethoxysilan, Methyltrihydroxysilan, Methyltriethoxysilan, Ethyltrimethoxysilan, Methyltriacetoxysilan, Ethyltriethoxysilan, Phenyltrialkoxysilan (z.B. Phenyltriethoxysilan und Phenyltrimethoxysilan) und Mischungen daraus. Als Alkoxysilane seien beispielhaft folgende Verbindungen genannt: Tetramethoxysilan und Tetraethoxysilan und Mischungen daraus.

Als Katalysatoren können beispielsweise organische und/oder anorganische Säuren oder Basen verwendet werden.

In einer Ausführungsform können die kolloiden Siliziumdioxidpartikel auch durch Vorkondensation ausgehend von Alkoxysilanen in situ gebildet werden (siehe hierzu "The Chemistry of Silika", Ralph K. Iler, John Wiley & Sons, (1979), p. 312-461).

Die Hydrolyse der Sol-Gel-Lösung wird durch Zugabe von Lösungsmitteln, bevorzugt alkoholischen Lösungsmitteln wie z.B. Isopropanol, n-Butanol, Isobutanol oder Mischungen daraus, abgebrochen bzw. stark verlangsamt. Anschließend werden ein bzw. mehrere UV-Absorber, die optional in einem Lösungsmittel vorgelöst sind, zu der Sol-Gel Beschichtungslösung gegeben, wonach ein Alterungsschritt von wenigen Stunden oder mehreren Tagen/Wochen eintritt.

Des weiteren können noch weitere Additive und/oder Stabilisatoren wie beispielsweise Verlaufsmittel, Oberflächenadditive, Verdickungsmittel, Pigmente, Farbstoffe, Härtungskatalysatoren, IR-Absorber und/oder Haftvermittler zugesetzt werden. Auch die Verwendung von Hexamethyl-disilazan oder vergleichbaren Verbindungen, die zu einer reduzierten Rissanfälligkeit der Beschichtungen führen können, ist möglich (vgl. auch WO 2008/109072 A). Bevorzugt ist die Kratzfestbeschichtung aus einem Lack bzw. Sol-Gel Lack erhältlich, der keine polymeren Organosilioxane enthält. Besonders bevorzugte Kratzfestbeschichtungen sind aus den oben genannten Sol-Gel-Beschichtungslösungen hergestellt. Thermische, UV-stabilisierte silika-haltige Sol-Gel-Lacke sind beispielsweise von der Momentive Performance Materials GmbH unter den Produktbezeichnungen AS4000® und AS4700® erhältlich.

Ein möglicher thermisch härtbarer Hybridlack ist der PHC587B^{®} oder PHC587C^{®} (Momentive Performance Materials GmbH), siehe hierzu auch EP-A 0 570 165. Die Schichtdicke sollte zwischen 1 bis 20 µm, bevorzugt 3 bis 16 µm und besonders bevorzugt 8 bis 14 µm betragen.

Als silika-haltige Kratzfestbeschichtungen sind auch UV-härtbare, Silika - Nanopartikel-haltige Acrylatlacke, wie sie in WO 2008/071363 A oder DE-A 2804283 beschrieben werden, zu verwenden. Ein kommerziell erhältliches System ist der UVHC3000^{®} (Momentive Performance Materials GmbH).

Die Schichtdicke der Kratzfestbeschichtung liegt bevorzugt im Bereich von 1 bis 25 µm, besonders bevorzugt von 4 bis 16 µm und ganz besonders bevorzugt von 8 bis 15 µm.

Die erfindungsgemäßen beschichteten Artikel können noch mit Polyelektrolyt-(Multi)schichten (P) beschichtet sein. Die Polyelektrolytschichten können mehrere einzelne Schichten umfassen (Multischichten). Diese können für die Erhöhung von Transmissionseigenschaften eine wichtige Rolle spielen. Die Herstellung erfolgt, wie beispielsweise in "Current Opinion in Colloid and Interface Science" 8 (2003), S. 86-95 beschrieben, nach dem self-assembled Prinzip. Als Einzelkomponenten für die Multischichten werden kationische Polymere, wie beispielsweise Polyallylaminhydrochlorid (PAH), Polydiallyldimethylammoniumchlorid (PDADMAC) oder Polyethylenimin und als anionische Polymere beispielsweise Polystyrolsulfonsäure-Na, Polyacrylsäure oder Dextransulfat eingesetzt. Wie in "Langmuir" 23 (2007), S. 8833-8837 oder in Chem. Mater. 19 (2007), S. 1427-1433 zitiert, können als ionische Polyelektrolytkomponenten auch geladene Nanopartikel, wie Silika-Nanopartikel mit stark negativen Zetapotenzialen oder Titandioxid -Nanopartikel mit stark positiven Zetapotenzialen eingesetzt werden. Insbesondere von Silika-haltigen Polyelektrolyt-Multischichten, die auf Glas appliziert werden, ist eine transmissionserhöhende Wirkung, beispielsweise von 90 % Lichtdurchlässigkeit (Transmission) auf über 99 % Transmission bekannt. Wie in o.g. Literatur beschrieben, liegt die Dicke derartiger Polyelektrolyt-Schichten, je nach Anzahl an Multischichten in der Regel in der Größenordung von ca. 50 bis 200 nm, generell deutlich unter 1000 nm (1µm).

Während durch die Polyelektrolyt (PEL)-Beschichtung, wie erwähnt, zwar sehr hohe Transmissionswerte erreicht werden können, ist die Kratzbeständigkeit derartiger PEL Oberflächen vergleichsweise gering. Obwohl der Transmissionseffekt der Polyelektrolyt-Multischichten bisher nur für PEL-Außenschichten beschrieben wurde, kann er überraschenderweise auch für die hier vorliegende Erfindung von Artikeln enthaltend flammgeschützte Substraten mit Silika-haltigen Kratzfest-Außenbeschichtungen genutzt werden. Hierzu können in einer Ausführungsform die Substrate zunächst beidseitig mit den PEL-Multischichten versehen werden, und diese dann einseitig (auf der Außenseite) mit einer geeigneten silika-haltigen Kratzfestbeschichtung werden.

Insbesondere ist für die erfindungsgemäßen Artikel somit ein Aufbau enthaltend Polyelektrolyt(multi)schicht(en) - Substrat - Polyelektrolyt(multi)schicht(en) - Kratzfestschicht bevorzugt.

Derartige Systeme weisen neben sehr guten Kratzbeständigkeiten auf der Außenseite auch hohe Transmissionswerte von über 94 % auf und sind deshalb für die erfindungsgemäße Verwendung in der Herstellung von beschichteten Artikeln, insbesondere Bildschirmen besonders geeignet.

Die erfindungsgemäßen beschichteten Artikel besitzen hervorragende Flammschutzeigenschaften in Kombination mit erhöhter Transmission und sehr guter Abriebbeständigkeit. "Regenbogeneffekte" sind bei Schichtdicken größer 10 µm nicht zu beobachten. In besonders bevorzugten Ausführungsformen besteht das Material für die Polymersubstrate aus flammgeschütztem Polycarbonat, das Schmelzviskositätswerte (Melt Volume Rate MVR in cm³/10 min.) > 10 (bei 300 °C und 1,2 kg nach ISO 1133), besonders bevorzugt einen MVR > 20 (bei 300 °C und 1,2 kg nach ISO 1133) und ganz besonders bevorzugt einen MVR > 30 (bei 300 °C und 1,2 kg nach ISO 1133) aufweist. Flammschutzeigenschaften lassen sich beispielsweise durch eine oder mehrere der folgenden Flammschutzprüfungen bestimmen:
Die Flammwidrigkeit von Kunststoffen wird gängigerweise nach der Methode UL94V Underwriters Laboratories Inc. Standard of Safety, "Test for Flammability of Plastic Materials for Parts in Devices and Appliances", S14 ff, Northbrook 1998; b) J. Troitzsch, "International Plastics Flammability Handbook", S. 346 ff., Hanser Verlag, München 1990) (weiter Details siehe unter 3.2.) bestimmt werden. Bewertet werden hierbei Nachbrennzeiten und Abtropfverhalten von ASTM-Normprüfkörpern.

Für die Einstufung eines flammgeschützten Kunststoffs in die Brandklasse UL94V-0 müssen im einzelnen die folgenden Kriterien erfüllt sein: bei einem Satz von 5 ASTM Normprüfkörpern (Maße: 127 x 12,7 x X, mit X = Dicke des Prüfkörpers, z.B. 3,2; 3,0; 1,5 1,0 oder 0,75 mm) dürfen alle Proben nach zweimaliger Beflammung von 10 Sekunden Dauer mit einer offenen Flamme definierter Höhe nicht länger als 10 Sekunden nachbrennen.

Die Summe der Nachbrennzeiten bei 10 Beflammungen von 5 Proben darf nicht größer als 50 Sekunden sein. Zudem darf kein brennendes Abtropfen, vollständiges Abbrennen oder Nachglühen des jeweiligen Prüfkörpers von länger als 30 Sekunden erfolgen. Die Einstufung UL94V-1 verlangt, dass die Einzelnachbrennzeiten nicht länger als 30 Sekunden betragen und dass die Summe der Nachbrennzeiten von 10 Beflammungen von 5 Proben nicht größer als 250 Sekunden ist. Die Gesamtnachglühzeit darf nicht mehr als 250 Sekunden betragen. Die übrigen Kriterien sind identisch mit den oben erwähnten. Eine Einstufung in die Brandklasse UL94V-2 erfolgt dann, wenn es bei Erfüllen der übrigen Kriterien der UL94V-1 Einstufung zu einem brennenden Abtropfen kommt.

Die Brennbarkeit von Prüfkörpern kann darüber hinaus auch durch die Bestimmung des Sauerstoffindex (LOI nach ASTM D 2863-77) beurteilt werden.

Eine weitere Prüfung der Flammwidrigkeit besteht in der Glühdrahtprüfung nach DIN IEC 695-2-1. Hierbei wird an 10 Prüfkörpern (beispielsweise an Platten der Geometrie 60 x 60 x 2 mm oder 1 mm) mit Hilfe eines glühenden Drahtes bei Temperaturen zwischen 550 und 960°C die maximale Temperatur ermittelt, bei der eine Nachbrennzeit von 30 Sekunden nicht überschritten wird und die Probe nicht brennend abtropft. Diese Prüfung ist besonders im Bereich Elektro/Elektronik von Interesse, da Bauelemente in elektronischen Erzeugnissen im Fehlerfall oder bei Überlastung derart hohe Temperaturen annehmen können, dass sich Teile in unmittelbarer Nähe entzünden können. In der Glühdrahtprüfung wird eine solche thermische Beanspruchung nachempfunden.

In einer speziellen Form des Glühdrahttests, dem Glow-Wire-Ignition-Test nach IEC 60695-1-13 liegt das Hauptaugenmerk auf dem Entzündungsverhalten des Prüfkörpers. Hierbei darf sich die Probe während des Prüfvorgangs nicht entzünden, wobei Entzündung als Flammenerscheinung länger als 5 Sekunden definiert ist. Ein brennendes Abtropfen der Probe ist nicht zulässig.

Die erfindungsgemäßen Artikel bestehen einen oder mehrere der vorgenannten Flammschutzprüfungen und verfügen außerdem über weitere vorteilhafte Eigenschaften, insbesondere in Bezug auf Kratz- und Abriebsfestigkeit, Transmission / Transparenz und Regenbogeneffekte.

Die beschichteten Artikel sind hochtransparent. Insbesondere weisen sie bei einer Wellenlänge 550 nm eine Transmission von mindestens 88 %, bevorzugt mehr als 89 % und in ganz besonders bevorzugten Fällen mehr als 89,5 % oder mehr als 90 % auf und bei einer Wellenlänge von 700 nm eine Transmission von mindestens 90 %, bevorzugt mehr als 91 % und in ganz besonders bevorzugten Fällen mehr als 91,5 % oder mehr als 92 % auf.

In Kombination mit dieser Transparenz weisen die beschichteten Artikel noch gute Abriebsbeständigkeiten, sowie erhöhte Flammwidrigkeitswerte auf.

Hinsichtlich Abriebbeständigkeit werden nach dem Abrasionstest (DIN 53 754) Werte von weniger als 15 % Haze, insbesondere weniger als 10%, und ganz besonders weniger als 5% erhalten.

Hinsichtlich Flammwidrigkeit nach der Norm UL 94 V erhalten mindestens 70% der Proben eine V1 - oder bessere Bewertung, bevorzugt erhalten 80% der Proben eine V1 - oder bessere Bewertung besonders bevorzugt erhalten 90% der Proben eine V1 - oder bessere Bewertung, ganz besonders bevorzugt erhalten 100% der Proben eine V1 - oder bessere Bewertung.

Der erfindungsgemäße Artikel ist somit dadurch gekennzeichnet, dass er bei einer Wellenlänge von 550 nm eine Transmission gemessen nach ASTM E 1348 von mindestens 88 %, bevorzugt mehr als 89 % und in ganz besonders bevorzugten Fällen mehr als 89,5 % oder mehr als 90 % auf und bei einer Wellenlänge von 700 nm eine Transmission gemessen nach ASTM E 1348 von mindestens 90 %, bevorzugt mehr als 91 % und in ganz besonders bevorzugten Fällen mehr als 91,5 % oder mehr als 92 % aufweist; im Abrasionstest gemessen nach DIN 53 754 Werte von weniger als 15 % Haze, insbesondere weniger als 10%, und ganz besonders weniger als 5% aufweist und in der Flammwidrigkeitsprüfung nach der Norm UL 94 V mit einer Wahrscheinlichkeit von 70% eine V1 - oder bessere Bewertung, insbesondere mit einer Wahrscheinlichkeit von 80% eine V1 - oder bessere Bewertung, besonders bevorzugt mit einer Wahrscheinlichkeit von 90% eine V1 - oder bessere Bewertung, ganz besonders bevorzugt mit einer Wahrscheinlichkeit von 100% eine V1 - oder bessere Bewertung erhält.

Die erfindungsgemäßen Artikel können daher beispielsweise zur ökonomischen Herstellung von Flachbildschirmen, wobei Rahmen und Bildfläche gegebenenfalls in einem einzigen Spritzguss -Prozess hergestellt werden können, eingesetzt werden. Die Erfindung lässt sich außerdem auch für andere Glazing-Anwendungen nutzen, wie z.B. Gebäudeverscheibungen (Architectural Glazing) und Automobilverscheibungen (Automotive Glazing).

### Beispiele

### A) die Substrate

### Beispiel 1) Herstellung eines flammgeschützten, leichtfließenden Polycarbonats

Für die Herstellung der Zusammensetzung aus Beispiel 1 wurden folgende thermoplastischen Polymere eingesetzt:
Makrolon® 2408 ist ein kommerziell von der Firma Bayer MaterialScience AG erhältliches Bisphenaol-A basiertes Polycarbonat. Makrolon® 2408 hat EU-/FDA-Qualität und enthält keinen UV-Absorber. Die Schmelze-Volumenfließrate (MVR) nach ISO 1133 beträgt 19 cm³/(10 min) bei 300 °C und 1,2 kg Belastung.

Makrolon® LED2245 ist ein kommerziell von der Firma Bayer MaterialScience AG erhältliches lineares Bisphenol-A basiertes Polycarbonat. Makrolon® LED2245 hat EU-/FDA-Qualität und enthält keinen UV-Absorber. Die Schmelze-Volumenfließrate (MVR) nach ISO 1133 beträgt 35 cm³/(10 min) bei 300 °C und 1,2 kg Belastung.

Es wurden folgende Additive eingesetzt:
"C4" = Bayowet® C4 ist ein kommerziell bei der Firma Lanxess AG erhältliches Kalium-nona-fluor-1-butansulfonat.

Die flammgeschützte thermoplastische Zusammensetzung gemäß der vorliegenden Erfindung wird in einer Vorrichtung umfassend a) eine Dosiereinrichtung für die Komponenten, b) einem gleichlaufenden Zweiwellenkneter (ZSK 25 von der Firma Werner & Pfleiderer) mit einem Schneckendurchmesser von 25 mm c) einer Lochdüse zur Ausformung von Schmelzesträngen d) einem Wasserbad zur Abkühlung und dem Verfestigen der Stränge und einem Granulator compoundiert.

Die thermoplastische Polymerzusammensetzung für das Beispiel 1 wurde hergestellt, indem 10 Gew.-% einer Pulvermischung aus 99,35 Gew.-% pulverförmigem Makrolon® 2408 mit und 0,65 Gew.-% Flammschutzmittel C4 zu 90 Gew.-% Makrolon LED® 2245 Granulat zudosiert wird.

**Dabei wurden folgende Verfahrensparameter eingestellt:**

| **Verfahrensparameter** | |
|---|---|
| Masse-Temperatur | 272 °C |
| Drehzahl Extruder | 99 min⁻¹ |
| Drehmoment in % | 37-45 % |
| Druck Düse | 19 bar |
| Düsenbohrung | 1x4mm |
| Gehäusetemperatur Gehäuse 1: | 54 °C |
| Gehäusetemperatur Gehäuse 2: | 220 °C |
| Gehäusetemperatur Gehäuse 3: | 240 °C |
| Gehäusetemperatur Gehäuse 4: | 260 °C |
| Gehäusetemperatur Gehäuse 5: | 260 °C |
| Gehäusetemperatur Gehäuse 6: | 260 °C |
| Gehäusetemperatur Gehäuse 7: | 260 °C |
| Gehäusetemperatur Gehäuse 8: | 260 °C |
| Gehäusetemperatur Kopf 13: | 260 °C |

Es wurde ein leichtfließendes Bisphenol-A Polycarbonat mit einem MVR (300°C/1,2kg) 36 cm³/10 min erhalten (gemessen nach nach ISO 1133)

### Herstellung der Substratschichten

### Beispiel 2) Platten aus Makrolon® 6555

Es wurden Platten aus Makrolon^{®} 6555 (Bisphenol A-Polycarbonat der Fa. Bayer MaterialScience AG, mittelviskos: MVR (300°C/1,2kg) 10 cm³/10 min, mit Chlor- und Brom freier Flammschutzausrüstung) hergestellt, in dem die unten angegeben Granulate jeweils zu plattenförmigen Probekörpern der Geometrie 100 * 150 * 2 mm und 100 * 150 * 3 mm verarbeitet wurden. Dies geschieht mit einer Arburg Allrounder 270S-500-60 mit einem Schneckendurchmesser von 18 mm. Dabei werden folgende Verfahrensparameter eingestellt:

| **Verfahrensparameter** | |
|---|---|
| Massetemperatur | 300 °C |
| Werkzeugtemperatur | 90 °C |
| Einspritzgeschwindigkeit | 40 mm/s |
| Staudruck | 150 bar |

### Beispiel 3) Platten aus der Zusammensetzung Beispiel 1):

Analog Beispiel 2 wurden Platten aus dem Bisphenol-A Polycarbonat, MVR (300°C/1,2kg nach ISO 1133) 36 cm³/10 min, mit bromfreier Flammschutzausrüstung, des Beispiels 1 hergestellt.

| **Verfahrensparameter** | |
|---|---|
| Massetemperatur | 280 °C |
| Werkzeugtemperatur | 90 °C |
| Einspritzgeschwindigkeit | 40 mm/s |
| Staudruck | 150 bar |

### Beispiel 4) UL - Prüfstäbe aus Makrolon® 6555

Mit der gleichen Spritzgießmaschine (Arburg Allrounder 270S-500-60 mit einem Schneckendurchmesser von 18 mm) und gleichen Verfahrensparametern wie in Beispiel 2 wurden verschieden dicke UL - Prüfstäbe: Prüfstabdimensionen: 127 mm * 12,7 mm * D mm (D (mm) = 3,2/2,6/2,2 sowie 2,0) aus Makrolon^{®} 6555 (Bisphenol A-Polycarbonat der Fa. Bayer MaterialScience AG, mittelviskos: MVR (300°C/1,2kg nach ISO 1133) 10 cm³/10 min, mit Chlor- und Brom freier Flammschutzausrüstung) spritzgegossen.

Bei den UL - Prüfstäben handelt es sich um ASTM Normprüfkörper zur UL 94 - Brandklassifizierung.

### Beispiel 5) UL - Prüfstäbe aus der Zusammensetzung Beispiel 1

Analog Beispiel 4 wurden UL - Prüfstäbe aus dem Bisphenol-A Polycarbonat, MVR (300°C/1,2kg) 36 cm³/10 min, mit bromfreier Flammschutzausrüstung, des Beispiels 1 hergestellt.

### B) Herstellung und Ausprüfung der beschichteten Artikel

### a) Verwendete Kratzfestlacke

PHC587^{®} ist kommerziell erhältlich von der Momentive Performance Materials GmbH, Deutschland und ist eine wetterbeständige und Abrieb-resistente Silika-enthaltende Kratzfestlack-Formulierung mit organischen Bestandteilen mit einem Silika- Feststoffgehalt von 20 +/- 1 Gew.-% in einem Lösemittelgemisch von Methanol, n-Butanol und Isopropanol.

Der Kratzfestlack kann ohne Primerzwischenschicht auf Polycarbonat Substrate beschichtet werden kann. In den hier beschriebenen durchgeführten Beispielen erfolgte die Beschichtung mittels Flutverfahren wie weiter unten beschrieben.

Nach der Beschichtung wird in einem Heißluftofen bei 110°C 60 min. getempert (curing Prozess).

KASI-PC Flex^{®} ist kommerziell erhältlich von der Fa. KRD Coatings GmbH mit einem Feststoffgehalt: und ist eine zu PHC587^{®} weitgehende analoge, wetterbeständige und Abrieb-resistente SilikaenthalendeKratzfestlack-Formulierung mit einem Feststoffgehalt von 18 - 30 Gew.-% in einem Isopropylglykol/Methoxypropanol 70:30 - Lösungsmittelgemisch.

Der Kratzfestlack kann ebenfalls ohne Primerzwischenschicht auf Polycarbonat Substrate beschichtet werden kann. In den hier beschriebenen durchgeführten Beispielen erfolgte die Beschichtung mittels Flutverfahren wie weiter unten beschrieben.

Nach der Beschichtung wird in einem Heißluftofen bei 110°C 60 min. getempert (curing).

SHP 401^{®} / AS 4000^{®} ist eine kommerziell erhältliche Primerformulierung / Kratzfestlacksystem der Momentive Performance Materials GmbH.

AS 4000^{®} ist in Analogie zu PHC 587 bzw. KASI-PC Flex eine Silika-enthaltende Kratzfestlack-Formulierung, die jedoch im Gegensatz zu PHC bzw. KASI keine organischen Bestandteile enthält. Nach der Beschichtung ist analog zu PHC 587, bzw. KASI-PC Flex ein "curing" bei 130 °C erforderlich.

Bei SHP 401^{®} handelt es sich um eine Lösemittel-haltige Primer Formulierung auf Basis Polymethylmethacrylat für AS 4000^{®}.

Nach der Beschichtung mit der Primerformulierung wird das Lösemittel abgedampft, so dass sich die Primerschicht ausbildet.

UVHC3000^{®} ist ein kommerziell erhältliches Kratzfestlacksystem der Momentive Performance Materials GmbH. Es handelt sich hierbei um eine Lösemittel basierte UV vernetzbare Silika-Nanopartikelhaltige Kratzfestlack- Formulierung.

Nach der Beschichtung wird das Lösemittel bei 75°C während 10 Minuten abgedampft und anschließend mit UV Licht bei einer Dosis von ca. 10 J/cm² vernetzt.

### b) Testmethoden:

Schichtdicke : Mittels Weißlichtinterferometer (ETA SPB-T, ETA-Optik GmbH)
Haftung: Die Haftung wurde bestimmt mittels Gitterschnittprüfung nach DIN EN ISO 2409 und anschliessender visueller Beurteilung der Prüfkörper. Dabei bedeutet ein Gitterschnitt-Kennwert 0, dass alle Schnittränder vollkommen glatt sind und keines der Gitterschnittquadrate abgeplatzt ist. Ein Gitterschnitt-Kennwert von 5 bedeutet, dass alle Gitterschnittquadrate abgeplatzt sind. Die Kennwerte zwischen diesen beiden Extremen werden entsprechend der Norm vergeben.
Trübung: Die Trübung (Haze) wird nach ASTM D 1003-00 über Weitwinkel Lichtstreuung ermittelt. Die Angaben erfolgen in % Haze (H), wobei niedrige Werte (z.B. 0,5% H) eine niedrige Trübung und hohe Transparenz bedeuten.
Abrasionstest: Mittels Reibradverfahren wird die Verschleißfestigkeit (Abrieb, DIN 53 754) über die Zunahme des Streulichts bestimmt. Eingesetzt wurde ein Taber Abrasionsgerät Modell 5151 mit CS-10F Calibrase Reibräder (Typ IV) mit 500 g Auflagegewicht pro Rad. Die Haze-Werte werden nach einer bestimmten Anzahl von Zyklen, hier 100 oder 1000 Zyklen, gemessen, wobei niedrige Werte, bspw. 0.5 % H, eine gute Abriebbeständigkeit bedeuten. Von der Größenordnung bedeutet ein Δ Haze 1000-Wert von ca. 2-3 (Haze Wert nach 1000 Abriebzyklen) eine hervorragende Abriebbeständigkeit.
Bleistifthärte: Die Härte der Lackoberfläche wird nach ASTM 3363 mit Bleistiften unterschiedlicher Härtegrade getestet, wobei B weich, F fest und H hart bedeuten.
Stahlwolltest: Der Test erfolgte am Testgerät "Abraser" von Byk Gardner, wobei Rakso Stahlwolle Sorte 00 bei einem Auflagegewicht von 150 g, verwendet wurde. Es wurden insgesamt 20 Hin- und Rückschube durchgeführt, wobei die Zerkratzung visuell beurteilt wurde.
Wasserlagerung: Die Probe wird nach ASTM 870-02 über 10 Tage in 65 +/- 2 °C warmem Wasser gelagert, wobei täglich die o. g. optischen und mechanischen Tests durchgeführt werden.
Kochtest: Die Proben werden in kochendes Wasser gelegt, wobei nach 0.5, 1, 2, 3, und 4 h die o.g. optischen und mechanischen Tests durchgeführt werden. Werden bspw. 4 h Kochtest schadlos passiert, kann eine gute Langzeitbeständigkeit prognostiziert werden.
Transmissionstest: Gerät: Perkin Elmer Lamda 900, Messung der Gesamttransmission
Newton Ringe (Regenbogenfarben): Die Detektion erfolgt nach der Weißlichtinterferometrie Methode, wobei das Substrat mit einer Weißlichtquelle im Winkel von 55° beleuchtet wird. Falls aufgrund von Schichtdickenschwankungen "Regenbogeneffekte" auftreten, können diese Effekte mit einer CCD Camera aufgenommen werden.
Brandtest: Die Durchführung der Brandversuche erfolgt an Prüfstäben nach der Norm UL 94 V, wie in den offiziellen Underwriters Laboratories (UL) - Prüfverfahren beschrieben ist.

Hier werden die Brennbarkeitsklassen wie folgt definiert:

| | Brennbarkeitsklasse UL 94 | | | |
|---|---|---|---|---|
| | V-0 | V-1 | V-2 | Vn.B. |
| Nachbrennzeit nach Beflammung (s) | ≤ 10 | ≤ 30 | ≤ 30 | V-2 nicht erfüllt |
| Summe aller Nachbrennzeiten (s) (10 Beflammungen) | ≤ 50 | ≤ 250 | ≤ 250 | |
| Nachbrennen und Nachglühen der Proben nach der zweiten Beflammung (s) | ≤ 30 | ≤ 60 | ≤ 60 | |
| Brennendes Abtropfen (Zündung der Watte) | nein | nein | ja | |
| Völliges Abbrennen der Probe | nein | nein | nein | |

### c) Beschichtungen der Substrate mit den Kratzfestlacken

### Beispiel 6) Einseitige Beschichtung der Platte aus Beispiel 2 mit PHC587^{®} (Fluten)

Das Substrat wurde per Fluten im 90° Winkel beschichtet, 30 min. im Abzug bei RT abgelüftet und anschließend 60 min. bei 110° C getempert.

Im Vergleich zum Substrat wurden durch die Beschichtung die folgenden Eigenschaftsveränderungen erzielt:

| | Beispiel 2 | Beispiel 6 |
|---|---|---|
| Haze (%) | 0.59 | 0.31 |
| ΔHaze 100 (%) | 31.01 | 1.19 |
| ΔHaze 1000 (%) | 40.81 | 2.56 |
| Stahlwolltest Rakso 00 | stark verkratzt | keine Verkratzung |
| Bleistifthärte BH | 3B | F |
| Transmission % (550 nm) | 88.5 | 89.6 |
| Transmission % (700 nm) | 90.3 | 91.3 |
| Schichtdicke (µm) | - | 2.5 - 5.0 µm |
| Haftung (Kochtest) | - | 4 h: 0 |

Wie ersichtlich, werden sowohl alle mechanische Eigenschaften und überraschenderweise auch die Transmissionseigenschaften durch die Beschichtung stark verbessert.

### Beispiel 7) Beidseitige Beschichtung der Platte aus Beispiel 2 mit PHC587^{®} (Tauchen)

Die Substratplatte, geschnitten auf die Dimensionen 104 x 147 x 3mm, wurde für ca. eine Sekunde in die Lacklösung getaucht, ca. 30 Minuten bei RT abgelüftet und anschließend 60 Minuten bei 110°C getempert.

Durch das Tauchverfahren wurde beidseitig eine im Hinblick auf die mechanischen Eigenschaften (Abrieb bzw.ΔHaze Werte, Stahlwoll Test und Bleistift Härte) mit der einseitig per Flutverfahren aufgebrachten Beschichtung vergleichbare Kratzfestschicht erhalten. Es konnte durch die beidseitige Beschichtung eine weitere Erhöhung der Transmissionswerte erzielt werden:

| | Beispiel 2 | Beispiel 7 |
|---|---|---|
| Transmission % (550nm) | 88.5 | 91.3 |
| Transmission % (700 nm) | 90.3 | 94.1 |

### Beispiel 8) Beidseitige Beschichtung der Prüfstäbe aus dem Beispiel 4 mit PHC 587^{®}

Die beidseitige Beschichtung erfolgte durch Tauchen der Prüfstäbe aus Beispiel 4 in die PHC 587^{®}-Kratzfest-Lacklösung. Anschließend wurde 30 Minuten bei RT abgelüftet und dann 60 Minuten bei 110 °C getempert.

Das Brandverhalten wurde nach oben beschriebener UL Norm geprüft. Folgende Tabelle gibt die Ergebnisse der Einzelstabbeflammung wieder:

| UL 94 @ x mm | Anzahl V-0 | Anzahl V-1 | Anzahl V-2 | Anzahl Vn.B. |
|---|---|---|---|---|
| Beispiel 4 (2,6 mm) | 0 | 0 | 10 | 0 |
| Beispiel 8 (2,6 mm) | 10 | 0 | 0 | 0 |
| Beispiel 4(2,2 mm) | 0 | 0 | 10 | 0 |
| Beispiel 8 (2,2 mm) | 10 | 0 | 0 | 0 |
| Beispiel 4 (2,0 mm) | 1 | 0 | 19 | 0 |
| Beispiel 8 (2,0 mm) | 12 | 2 | 6 | 0 |

Resume der Brandversuche: Aus den Ergebnissen ist zu entnehmen, dass das Brandverhalten des Substrates aus Beispiel 4 durch die Beschichtung erheblich verbessert wurde (Beispiel 8).

Resume des Gesamtversuches: Durch die Beschichtung mit PHC587^{®} wurden sowohl die mechanischen Oberflächeneigenschaften (Abrieb, Bleistifthärte) als auch die optischen Eigenschaften (Haze und Transmission) erheblich verbessert. Darüber hinaus wurden auch deutliche Verbesserungen im Brandverhalten erzielt.

### Beispiel 9) Einseitige Beschichtung der Platte aus Beispiel 2 mit KASI-PC Flex^{®} (Fluten)

Auf das Substrat aus Beispiel 2 wurde der KASI-PC Flex Lack durch Fluten im 90° Winkel appliziert, wobei die Oberseite beschichtet wurde. Das beschichtete Substrat wurde 45 min. im Abzug bei RT getrocknet und anschließend 120 min. bei 110° C getempert.

Im Vergleich zum Substrat wurden die folgenden Eigenschaften ermittelt:

| | Beispiel 2 | Beispiel 9 |
|---|---|---|
| Haze (%) | 0.59 | 0.26 |
| ΔHaze 100 (%) | 31.01 | 4.38 |
| ΔHaze 1000 (%) | 40.81 | 4.39 |
| Stahlwolltest Rakso 00 | stark verkratzt | keine Verkratzung |
| Bleistifthärte BH | 3B | H |
| Transmission % (550 nm) | 88.5 | 88.9 |
| Transmission % (700 nm) | 90.3 | 91.6 |
| Schichtdicke (µm) | - | 2.9 - 7.3 µm |
| Haftung (Kochtest) | - | 4 h: 0 |

### Beispiel 10) Beidseitige Beschichtung der Platte aus Beispiel 2 mit KASI-PC Flex^{®} (Tauchen)

Die Substratplatte (Beispiel 2), geschnitten auf die Dimensionen 104 x 147 x 3mm, wurde für ca. eine Sekunde in die Lacklösung getaucht, ca. 30 Minuten bei RT abgelüftet und anschließend 60 Minuten bei 110°C getempert.

Durch das Tauchverfahren wurde beidseitig eine im Hinblick auf die mechanischen Eigenschaften (Abrieb bzw. ΔHaze - Werte, Stahlwolltest und Bleistifthärte) mit der einseitig per Flutverfahren aufgebrachten Beschichtung vergleichbare Kratzfestschicht (Beispiel 9) erhalten. Es konnte durch die beidseitige Beschichtung eine weitere Erhöhung der Transmissionswerte erzielt werden:

| | Beispiel 2 | Beispiel 10 |
|---|---|---|
| Transmission % (550nm) | 88.5 | 91.0 |
| Transmission % (700 nm) | 90.3 | 93.2 |

### Beispiel 11) Beidseitige Beschichtung durch Tauchen der Prüfstäbe aus dem Beispiel 4 mit KASI-PC Flex^{®} (Tauchen)

Die beidseitige Beschichtung erfolgte durch Tauchen von UL-Prüfstäben aus dem Beispiel 4 in der Dicke 2,6 mm in die Lacklösung. Anschließend wurde 30 Minuten bei RT abgelüftet und dann 60 Minuten bei 130°C getempert.

Das Brandverhalten wurde nach oben beschriebener UL - Norm geprüft. Folgende Tabelle gibt die Ergebnisse wieder.

**Brandverhalten:**

| UL 94 @ 2,6 mm | Anzahl V-0 | Anzahl V-1 | Anzahl V-2 | Anzahl Vn.B. |
|---|---|---|---|---|
| Beispiel 4 | 0 | 0 | 10 | 0 |
| Beispiel 11 | 10 | 0 | 0 | 0 |

### Beispiel 12) Einseitige Beschichtung der Platte aus Beispiel 2 mit SHP 401^{®} / AS 4000^{®} (Fluten)

Das Substrat wurde mit der Primer Lackformulierung SHP 401^{®} einseitig geflutet und 30 Minuten bei RT abgelüftet.

Anschließend wurde der Kratzfestlack AS 4000® auf die Primerschicht geflutet, 30 Minuten bei RT abgelüftet und anschließend 60 Minuten bei 130 °C getempert.

Im Vergleich zum Substrat wurden die folgenden Eigenschaften ermittelt:

| | Beispiel 2 | Beispiel 12 |
|---|---|---|
| Haze (%) | 0.59 | 0.28 |
| ΔHaze 100 (%) | 31.01 | 4.45 |
| ΔHaze 1000 (%) | 40.81 | 6.99 |
| Stahlwolltest Rakso 00 | stark verkratzt | keine Verkratzung |
| Bleistifthärte BH | 3B | 2H |
| Transmission % (550 nm) | 88.5 | 89.6 |
| Transmission % (700 nm) | 90.3 | 91.3 |
| Schichtdicke (µm) | - | 2.8 - 5.8 µm |
| Haftung (Kochtest) | - | 4 h: 0 |

### Beispiel 13) Beidseitige Beschichtung der Prüfstäbe aus dem Beispiel 4 mit SHP 401^{®} / AS 4000^{®} (Tauchen)

Die beidseitige Beschichtung erfolgte durch Tauchen von Prüfstäben aus Beispiel 4 mit der Dicke 2,2 mm in die Lacklösung. Anschließend wurde 30 Minuten bei RT abgelüftet und dann 60 Minuten bei 130 °C getempert.

Das Brandverhalten wurde nach oben beschriebener UL-Norm geprüft. Folgende Tabelle gibt die Ergebnisse wieder.

**Brandverhalten:**

| UL 94 @ 2,2 mm | Anzahl V-0 | Anzahl V-1 | Anzahl V-2 | Anzahl Vn.B. |
|---|---|---|---|---|
| Beispiel 4 | 0 | 0 | 10 | 0 |
| Beispiel 13 | 10 | 0 | 0 | 0 |

### Beispiel 14) Einseitige Beschichtung der Platte aus Beispiel 3 mit UV HC 3000^{®} (Fluten)

Bei Beispiel 3 handelt es sich um ein Substrat eines leicht fließenden Polycarbonats mit einem MVR von 36 cm³/10 min.

Das Substrat wurde per Fluten im 90° Winkel beschichtet, 10 min. im Abzug bei RT abgelüftet und anschließend 10 min. bei 75° C getempert.

Anschließend wurde unter CO₂-Atmosphäre mit einer Fe - Lampe UV vernetzt, wobei eine UV Dosis von ca. 10 J/cm² appliziert wurde.

Im Vergleich zum Substrat wurden durch die Beschichtung die folgenden Eigenschaftsveränderungen erzielt:

| | Beispiel 3 | Beispiel 14 |
|---|---|---|
| Haze (%) | 0.65 | 0.58 |
| ΔHaze 100 (%) | 34.0 | 3.2 |
| ΔHaze 1000 (%) | 40.9 | 6.1 |
| Stahlwolltest Rakso 00 | stark verkratzt | keine Verkratzung |
| Bleistifthärte BH | 3B | F |
| Transmission % (550 nm) | 90.0 | 90.7 |
| Transmission % (700 nm) | 90.1 | 91.7 |
| Schichtdicke (µm) | - | 4.7 - 14.5 µm |
| Haftung (Kochtest) | - | 4 h: 0 |

### Beispiel 15) Beidseitige Beschichtung der Substratplatte aus Beispiel 3 mit UV HC 3000^{®} (Tauchen)

Die Substratplatte, geschnitten auf die Dimensionen 104 x 147 x 3 mm, wurde für ca. eine Sekunde in die Lacklösung getaucht. Es wird 10 min. im Abzug bei RT abgelüftet und anschließend 10 min. bei 75 C getempert.

Anschließend wurde unter CO₂ Atmosphäre mit einer Fe - Lampe UV vernetzt, wobei eine UV Dosis von ca. 10 J/cm² appliziert wurde.

Durch das Tauchverfahren wurde beidseitig eine im Hinblick auf die mechanischen Eigenschaften (Abrieb bzw. ΔHaze - Werte, Stahlwolltest und Bleistifthärte) mit der einseitig per Flutverfahren aufgebrachten Beschichtung vergleichbare Kratzfestschicht (Beispiel 14) erhalten. Es konnte durch die beidseitige Beschichtung eine weitere Erhöhung der Transmissionswerte erzielt werden:

| | |
|---|---|
| Transmission % (550nm) | 91.4 |
| Transmission % (700 nm) | 92.7 |

Wie ersichtlich, werden auch bei den Beispielen 14 und 15) sowohl alle mechanische Eigenschaften und überraschenderweise auch die Transmissionseigenschaften, durch die Beschichtung stark verbessert.

### Beispiel 16) Beidseitige Beschichtung durch Tauchen von UL-Prüfstäben aus der Zusammensetzung aus Beispiel 1 in UV HC 3000^{®} Kratzfestlack

Die beidseitige Beschichtung der Prüfstäbe erfolgte durch Tauchen der Prüfstäbe aus Beispiel 5 in UV HC 3000^{®} Kratzfestlacklösung.

Anschließend wurde wie in Bsp. 15 das Lösemittel abgedampft und UV vernetzt.

Das Brandverhalten wurde nach der UL-Prüfnorm wie oben beschrieben untersucht:

| UL 94 @ 3,2 mm | Anzahl V-0 | Anzahl V-1 | Anzahl V-2 | Anzahl Vn.B. |
|---|---|---|---|---|
| Beispiel 5, unbeschichtet | 1 | 0 | 9 | 0 |
| Beispiel 16 | 8 | 2 | 0 | 0 |

Resume der Brandversuche: Aus den Ergebnissen ist zu entnehmen, dass das Brandverhalten des Beispiel 5 durch die Beschichtung erheblich verbessert wurde (Beispiel 16).

Resume des Gesamtversuches: Durch die Beschichtung wurden sowohl die mechanischen Oberflächeneigenschaften (Abrieb, Bleistifthärte) als auch die optischen Eigenschaften (Haze und Transmission) erheblich verbessert. Darüber hinaus wurden auch deutliche Verbesserungen im Brandverhalten erzielt.

Im Bereich von Schichtdicken ab ca. 10 µm konnten die bei Lackoberflächen häufig zu beobachtenden Regenbogeneffekte nicht beobachtet werden.

### Beispiel 17) Einseitige Beschichtung der Platte aus Beispiel 3 mit KASI-PC Flex® (Fluten)

Bei Beispiel 3 handelt es sich um Substrat ein leicht fließendes Polycarbonat mit einem MVR von 36 cm/10 min.

### Die Beschichtung erfolgte analog Bsp. 9.

Im Vergleich zum Substrat wurden durch die Beschichtung die folgenden Eigenschaftsveränderungen erzielt:

| | Beispiel 3 | Beispiel 17 |
|---|---|---|
| Haze (%) | 0.65 | 0.41 |
| ΔHaze 100 (%) | 34.0 | 3.2 |
| ΔHaze 1000 (%) | 40.9 | 12.1 |
| Stahlwolltest Rakso 00 | stark verkratzt | keine Verkratzung |
| Bleistifthärte BH | 3B | F |
| Transmission % (550 nm) | 90.0 | 90.5 |
| Transmission % (700 nm) | 90.1 | 91.7 |
| Schichtdicke (µm) | - | 4.8 - 12.2 µm |
| Haftung (Kochtest) | - | 4 h: 0 |

### Beispiel 18) Beidseitige Beschichtung der Substratplatte aus Beispiel 3 mit KASI-PC Flex® (Tauchen)

Die Substratplatte, geschnitten auf die Dimensionen 104 x 147 x 3 mm, wurde für ca. eine Sekunde in die Lacklösung getaucht, ca. 30 Minuten bei RT abgelüftet und anschließend 60 Minuten bei 110°C getempert.

Durch das Tauchverfahren wurde beidseitig eine im Hinblick auf die mechanischen Eigenschaften (Abrieb bzw. ΔHaze - Werte, Stahlwolltest und Bleistifthärte) mit der einseitig per Flutverfahren aufgebrachten Beschichtung vergleichbare Kratzfestschicht (Beispiel 17) erhalten. Es konnte durch die beidseitige Beschichtung eine weitere Erhöhung der Transmissionswerte erzielt werden:

| | |
|---|---|
| Transmission % (550nm) | 91.3 |
| Transmission % (700 nm) | 93.7 |

Wie ersichtlich, werden auch bei den Beispielen 17 und 18) sowohl alle mechanische Eigenschaften und überraschenderweise auch die Transmissionseigenschaften, durch die Beschichtung stark verbessert.

### Beispiel 19) Beidseitige Beschichtung durch Tauchen von UL-Prüfstäben aus Beispiel 5 in KASI-PC Flex®

Die beidseitige Beschichtung der Prüfstäbe erfolgte durch Tauchen der Prüfstäbe Beispiel 5 in KASI-PC Flex® Kratzfestlacklösung. Anschließend wurde 30 Minuten bei RT abgelüftet und dann 60 Minuten bei 110 °C getempert.

**Brandverhalten**

| UL 94 @ 3,2 mm | Anzahl V-0 | Anzahl V-1 | Anzahl V-2 | Anzahl Vn.B. |
|---|---|---|---|---|
| Beispiel 5 | 1 | 0 | 9 | 0 |
| Beispiel 19 | 10 | 0 | 0 | 0 |

Resume der Brandversuche: Aus den Ergebnissen ist zu entnehmen, dass das Brandverhalten von Beispiel 5 durch die Beschichtung erheblich verbessert wurde.

Resume des Gesamtversuches: Durch die Beschichtung wurden sowohl die mechanischen Oberflächeneigenschaften (Abrieb, Bleistifthärte) als auch die optischen Eigenschaften (Haze und Transmission) erheblich verbessert. Darüber hinaus wurden auch deutliche Verbesserungen im Brandverhalten erzielt.

Im Bereich von Schichtdicken ab ca. 10 µm konnten die bei Lackoberflächen häufig zu beobachtenden Regenbogeneffekte nicht beobachtet werden.

### Beispiel 20: Beschichtung des Substrats aus Beispiel 2 nach dem Polyelektrolytverfahren

Die Platte wird folgenden Tauchprozessen unterzogen:
- Tauchen in kationisches Polyelektrolyt-Bad
- Tauchen in Wasserbad
- Tauchen in anionisches Polyelektrolyt Bad (enthaltend anionische Nanopartikel)
- Tauchen in Wasserbad

Nach dieser Tauchsequenz erhält man eine sogenannte Polyelektrolyt-Bilayer-Schicht. Durch mehrfache Wiederholung wird dementsprechend eine Beschichtung aus mehreren Polyelektrolyt-Bilayer-Schichten erhalten.

### Es wurden folgende Polyelektrolytlösungen verwendet:

### für Schritt a, kationische Polyelektrolyt Lösung: PDADMAC 0.05%ig in Boratpuffer pH 9.0

6.25 g Polydiallyldimethylammoniumhydrochlorid (PDADMAC 40%ig in Wasser, MW< 100 000g/mol, Aldrich) wurden in 51 Boratpuffer bei pH 9.0 (3.73g KCl, 3.09g Borsäure in 51 Wasser, mit NaOH auf pH 9.0 eingestellt) gelöst.

### für Schritt b. anionische Nanopartikellösung: Levasil^{®} 300, 0.05%ig in Boratpuffer pH 9.0

8.33 g Levasil 300 (SiO2 Nanopartikel, 9 nm, 30%ig in Wasser, HC Starck) wurden in 5 1 Boratpuffer - Lösung bei pH 9.0 (3.73g KCl, 3.09g Borsäure in 51 Wasser, mit NaOH auf pH 9.0 eingestellt) gelöst.

**Herstellung von zwölf Bilayer Schichten basierend auf PDADMAC/Levasil 300 auf dem Substrat**

### Beispiel 2

### a. Tauchen in die kationische PDADMAC Lösung:

Die Platte aus Beispiel 2 in den Dimensionen 150 x 100 mm wurde in ein 11 Becherglas mit 750 ml der kationischen Polyelektrolytlösung PDADMAC mit einer Verweilzeit von 5 min. getaucht. Anschließend wurde die Platte dreimal für je 1 min. in ein Becherglas mit frischem demineralisiertem Wasser getaucht.

### b. Tauchen in die anionische Silika Nanopartikellösung

Das mit der kationischen Lösung beschichtete Substrat wurde in ein 11 Becherglas mit 750 ml der anionischen Nanopartikel-Lösung Levasil 300 in einer Verweilzeit von 5 min. getaucht. Anschließend wurde die Platte dreimal für je 1 min. in ein Becherglas mit frischem demineralisiertem Wasser getaucht.

Nach Durchführung der Schritte a. und b. wurde die erste Bilayerschicht aus PDADMAC/Levasil 300 Beschichtung erhalten.

Schritte a. und b. wurden insgesamt 11-mal wiederholt, wodurch schließlich ein Substrat mit 12 PDADMAC/Levasil 300 - Bilayer-Schichten erhalten wurde.

Anschließend wurde die beschichtete Platte für 30 min. bei 130 °C im Warmlufttrockenschrank getempert.

### Beispiel 21: Kombinierte Beschichtung aus Polyelektrolyt und Kratzfest-Schicht

Die beschichtete Platte aus Beispiel 20 wurde anschließend auf einer Seite mit dem Kratzfestlack PHC 587^{®} analog Beispiel 6 mittels Flutverfahren beschichtet. Es wurde eine beschichtete Platte erhalten, die folgenden mechanischen Daten aufweist:
Im Vergleich zum Substrat wurden durch die Beschichtung die folgenden Eigenschaftsveränderungen erzielt:

| | Beispiel 2 | Beispiel 21 |
|---|---|---|
| Haze (%) | 0.59 | 0.31 |
| ΔHaze 100 (%) | 31.01 | 1.19 |
| ΔHaze 1000 (%) | 40.81 | 2.56 |
| Stahlwolltest Rakso 00 | stark verkratzt | keine Verkratzung |
| Bleistifthärte BH | 3B | F |
| Transmission % (550 nm) | 88.5 | 94.0 |
| Transmission % (700 nm) | 90.3 | 95.6 |
| Schichtdicke (µm) | - | 2.9 - 5.9 µm |
| Haftung (Kochtest) | - | 4 h: 0 |

### Beispiel 22) Beidseitige Beschichtung von UL-Prüfstäben (Beispiel 4) mit Polyelektrolytschichten und Kratzfestschicht.

Beispiel 22 a) UL - Prüfstäbe aus Beispiel 4 in der Dicke 2,6 mm wurden zunächst analog Beispiel 20 mit insgesamt zwölf PDADMAC/Levasil 300 - Bilayer-Schichten beidseitig beschichtet.

Beispiel 2 b) Anschließend erfolgte analog Beispiel 8 eine beidseitige Beschichtung der Prüfstäbe durch Tauchen der Prüfstäbe in PHC 587^{®} - Kratzfestlacklösung. Anschließend wurde 30 Minuten bei RT abgelüftet und dann 60 Minuten bei 130 °C getempert.

Das Brandverhalten wurde mittels UL-Norm geprüft:

| UL 94 @ 2,6 mm | Anzahl V-0 | Anzahl V-1 | Anzahl V-2 | Anzahl Vn.B. |
|---|---|---|---|---|
| UL-Prüfstäbe Beispiel 22 a) | 0 | 0 | 10 | 0 |
| UL-Prüfstäbe Beispiel 22 b) | 8 | 2 | 0 | 0 |

Resume des Gesamtversuches: Durch die kombinierte Beschichtung mit der Polyelektrolytschicht und der Kratzfestschicht wurden sowohl die mechanischen Oberflächeneigenschaften (Abrieb, Bleistifthärte) als auch die optischen Eigenschaften (Haze und Transmission) erheblich verbessert. Darüber hinaus wurden auch deutliche Verbesserungen im Brandverhalten erzielt.

## Patentansprüche

1. Beschichteter Artikel, enthaltend a) ein Substrat (S) mit einer Transmission > 75 %, gemessen nach ASTM E 1348 bei 3 mm Schichtdicke und einer Wellenlänge von 550 nm umfassend eine Substratschicht bestehend aus einem thermoplastischen Polymer enthaltend als Flammschutzmittel mindestens eines aus der Gruppe der Alkali- bzw. Erdalkalisalzen von aliphatischen bzw. aromatischen Sulfonsäure- Sulfonamid- und Sulfonimidderivaten und phosphorhaltigen Flammschutzmittel sowie gegebenenfalls Additive ausgewählt aus mindestens einem aus der Gruppe der Füllstoffe, UV-Stabilisatoren, Thermostabilisatoren, Antistatika und Pigmente, Entformungsmittel und Fließmittel , b) einseitig oder beidseitig auf dem Substrat eine Silika- enthaltende Kratzfestbeschichtung (K) und c) optional einseitig oder beidseitig Polyelektrolyt-(Multi)schichten (P).

2. Beschichteter Artikel gemäß Anspruch 1, wobei das Substrat (S) eine Transmission > 80 % aufweist.

3. Beschichteter Artikel gemäß Anspruch 1, wobei das Substrat (S) eine Transmission > 85 % aufweist.

4. Beschichteter Artikel gemäß Anspruch 1, **dadurch gekennzeichnet, dass** es sich bei dem Substrat um ein Polycarbonat oder eine Polycarbonatmischung mit einem MVR größer oder größer gleich 10 bei 300 °C und 1,2 kg nach ISO 1133 handelt.

5. Beschichteter Artikel gemäß Anspruch 4, **dadurch gekennzeichnet, dass** es sich bei dem Substrat um ein Polycarbonat oder eine Polycarbonatmischung mit einem MVR größer oder größer gleich 20 handelt.

6. Beschichteter Artikel gemäß Anspruch 4, **dadurch gekennzeichnet, dass** es sich bei dem Substrat um ein Polycarbonat oder eine Polycarbonatmischung mit einem MVR größer oder größer gleich 30 handelt.

7. Beschichteter Artikel gemäß Anspruch 1, wobei das Flammschutzmittel ausgewählt ist aus mindestens einem aus der Gruppe der Natrium- oder Kaliumperfluorbutansulfat, Natrium- oder Kaliumperfluormethansulfonat, Natrium- oder Kaliumperfluoroctansulfat, Natrium-oder Kalium-2,5-dichlorbenzolsulfat, Natrium- oder Kalium-2,4,5-trichlorbenzolsulfat, Natrium- oder Kalium-methylphosphonat, Natrium- oder Kalium-(2-phenyl-ethylen)-phosphonat, Natrium-oder Kaliumpentachlorbenzoat, Natrium- oder Kalium-2,4,6-trichlorbenzoat, Natrium-oder Kalium-2,4-dichlorbenzoat, Lithium-phenylphosphonat, Natrium- oder Kalium-diphenylsulfon-sulfonat, Natrium- oder Kalium-2-formylbenzolsulfonat, Natrium- oder Kalium-(N-benzolsulfonyl)-benzolsulfonamid, Trinatrium- oder Trikalium-hexafluoroaluminat, Dinatrium- oder Dikalium-hexafluorotitanat, Dinatrium- oder Dikalium-hexafluorosilikat, Dinatrium- oder Dikalium-hexafluorozirkonat, Natrium- oder Kalium-pyrophosphat, Natrium- oder Kaliummetaphosphat, Natrium- oder Kalium-tetrafluoroborat, Natrium- oder Kalium-hexafluorophosphat, Natrium- oder Kalium- oder Lithiumphosphat, N-(p-tolylsulfonyl-)-p-toluolsulfimid-Kaliumsalz, N-(N'-Benzy¬amino-carbonyl)-sulfanylimid-Kaliumsalz.

8. Beschichteter Artikel gemäß Anspruch 1, wobei das Flammschutzmittel ausgewählt ist aus mindestens einem aus der Gruppe bestehend aus Kalium-nona-fluor-1-butansulfonat und Natrium- und Kalium-diphenylsulfonsulfonat.

9. Beschichteter Artikel gemäß Anspruch 1, **dadurch gekennzeichnet, dass** auf dem Substrat eine oder mehrere Polyelektrolytschichten aufgebracht sind.

10. Beschichteter Artikel gemäß einem Anspruch 1, **dadurch gekennzeichnet**, sich bei dem Substrat (S) um eine Platte, Scheibe oder Folie handelt.

11. Beschichteter Artikel gemäß Anspruch 1, wobei es sich bei der silica-haltigen Kratzfestbeschichtung um eine Beschichtung erhältlich aus einem thermisch härtbaren Hybridlack handelt.

12. Beschichteter Artikel gemäß Anspruch 1, **dadurch gekennzeichnet, dass** er bei einer Wellenlänge von 550 nm eine Transmission gemessen nach ASTM E 1348 von mindestens 88 %, bei einer Wellenlänge von 700 nm eine Transmission gemessen nach ASTM E 1348 von mindestens 90 % und im Abrasionstest gemessen nach DIN 53 754 Werte von weniger als 15 % Haze aufweist und in der Flammwidrigkeitsprüfung nach der Norm UL 94 V mit einer Wahrscheinlichkeit von 70% eine V1 - oder bessere Bewertung erhält.

13. Verfahren zur Herstellung eines beschichteten Artikels gemäß Anspruch 1, enthaltend die Verfahrensschritte (i) Herstellung der Substratschicht, (ii) optional die einfache oder mehrfach wiederholte Beschichtung mit einer Polyelektrolytschicht und (iii) einseitige oder beidseitige Beschichtung mit einer Silika-haltigen Kratzfestbeschichtung.

14. Verwendung eines beschichteten Artikels gemäß Anspruch 1 zur Herstellung von Flachbildschirmen oder von Verscheibungen, insbesondere Automobil- oder Gebäudeverscheibungen.

15. Flachbildschirm und Verscheibungen enthaltend einen beschichteten Artikel gemäß Anspruch 1.

## Claims

1. Coated article comprising a) a substrate (S) having a transmission > 75% (measured according to ASTM E 1348 at a layer thickness of 3 mm and a wavelength of 550 nm) and comprising a substrate layer of a thermoplastic plastic containing as flameproofing agent at least one from the group of the alkali and alkaline earth salts of aliphatic and aromatic sulfonic acid, sulfonamide and sulfonimide derivatives and phosphorus-containing flameproofing agents and optionally additives selected from at least one from the group of the fillers, UV stabilisers, heat stabilisers, antistatics and pigments, demoulding agents and flow agents, b) a silica-containing scratch-resistant coating (K) on one side or on both sides of the substrate, and c) optionally polyelectrolyte (multi)layers (P) on one side or on both sides.

2. Coated article according to claim 1, wherein the substrate (S) has a transmission > 80%.

3. Coated article according to claim 1, wherein the substrate (S) has a transmission > 85%.

4. Coated article according to claim 1, **characterised in that** the substrate is a polycarbonate or a polycarbonate mixture having an MVR greater than or equal to 10 (at 300°C and 1.2 kg according to ISO 1133).

5. Coated article according to claim 4, **characterised in that** the substrate is a polycarbonate or a polycarbonate mixture having an MVR greater than or equal to 20.

6. Coated article according to claim 4, **characterised in that** the substrate is a polycarbonate or a polycarbonate mixture having an MVR greater than or equal to 30.

7. Coated article according to claim 1, wherein the flameproofing agent is selected from at least one from the group of sodium or potassium perfluorobutane sulfate, sodium or potassium perfluoromethanesulfonate, sodium or potassium perfluorooctane sulfate, sodium or potassium 2,5-dichlorobenzene sulfate, sodium or potassium 2,4,5-trichlorobenzene sulfate, sodium or potassium methylphosphonate, sodium or potassium (2-phenyl-ethylene)-phosphonate, sodium or potassium pentachlorobenzoate, sodium or potassium 2,4,6-trichlorobenzoate, sodium or potassium 2,4-dichlorobenzoate, lithium phenylphosphonate, sodium or potassium diphenylsulfone-sulfonate, sodium or potassium 2-formylbenzenesulfonate, sodium or potassium (N-benzenesulfonyl)-benzenesulfonamide, trisodium or tripotassium hexafluoroaluminate, disodium or dipotassium hexafluorotitanate, disodium or dipotassium hexafluorosilicate, disodium or dipotassium hexafluorozirconate, sodium or potassium pyrophosphate, sodium or potassium metaphosphate, sodium or potassium tetrafluoroborate, sodium or potassium hexafluorophosphate, sodium or potassium or lithium phosphate, N-(p-tolylsulfonyl)-p-toluenesulfimide potassium salt, N-(N'-benzylaminocarbonyl)-sulfanylimide potassium salt.

8. Coated article according to claim 1, wherein the flameproofing agent is selected from at least one from the group consisting of potassium nona-fluoro-1-butanesulfonate and sodium and potassium diphenylsulfonesulfonate.

9. Coated article according to claim 1, **characterised in that** one or more polyelectrolyte layers have been applied to the substrate.

10. Coated article according to claim 1, **characterised in that** the substrate (S) is a sheet, plate or film.

11. Coated article according to claim 1, wherein the silica-containing scratch-resistant coating is a coating obtainable from a thermally curable hybrid lacquer.

12. Coated article according to claim 1, **characterised in that** it has a transmission, measured according to ASTM E 1348, of at least 88% at a wavelength of 550 nm, a transmission, measured according to ASTM E 1348, of at least 90% at a wavelength of 700 nm, and values of less than 15% haze in the abrasion test, measured according to DIN 53 754, and achieves a rating of V1 or better with a probability of 70% in the flame resistance test according to standard UL 94 V.

13. Process for the production of a coated article according to claim 1, comprising the process steps (i) production of the substrate layer, (ii) optionally coating once or repeatedly with a polyelectrolyte layer, and (iii) coating on one side or on both sides with a silica-containing scratch-resistant coating.

14. Use of a coated article according to claim 1 in the production of flat display units or of glazing, in particular automotive or architectural glazing.

15. Flat display unit and glazing containing a coated article according to claim 1.

## Revendications

1. Article revêtu, contenant a) un substrat (S) ayant une transmission > 75 %, mesurée selon ASTM E 1348 en une épaisseur de couche de 3 mm et à une longueur d'onde de 550 nm, comprenant une couche de substrat constituée d'un polymère thermoplastique contenant en tant qu'agent ignifuge au moins un composé choisi dans le groupe des sels de métaux alcalins ou alcalino-terreux de dérivés aliphatiques ou aromatiques d'acide sulfonique, de sulfonamides et sulfonimides et des agents ignifuges phosphorés ainsi qu'éventuellement des additifs choisis parmi au moins un du groupe des charges, stabilisants UV, stabilisants thermiques, agents antistatiques et pigments, agents de démoulage et agents d'écoulement, b) sur une face ou sur les deux faces du substrat un revêtement anti-rayure (K), contenant de la silice et c) en option sur une face ou sur les deux faces des (multi)couches de polyélectrolyte (P).

2. Article revêtu selon la revendication 1, dans lequel le substrat (S) présente une transmission > 80 %.

3. Article revêtu selon la revendication 1, dans lequel le substrat (S) présente une transmission > 85 %.

4. Article revêtu selon la revendication 1, **caractérisé en ce que** pour ce qui est du substrat il s'agit d'un polycarbonate ou d'un mélange de polycarbonates ayant un indice MVR supérieur ou supérieur/égal à 10 à 300°C et sous 1,2 kg selon ISO 1133.

5. Article revêtu selon la revendication 4, **caractérisé en ce que** pour ce qui est du substrat il s'agit d'un polycarbonate ou d'un mélange de polycarbonates ayant un indice MVR supérieur ou supérieur/égal à 20.

6. Article revêtu selon la revendication 4, **caractérisé en ce que** pour ce qui est du substrat il s'agit d'un polycarbonate ou d'un mélange de polycarbonates ayant un indice MVR supérieur ou supérieur/égal à 30.

7. Article revêtu selon la revendication 1, dans lequel l'agent ignifuge est choisi parmi au moins l'un du groupe constitué par le perfluorobutanesulfate de sodium ou potassium, le perfluorométhanesulfonate de sodium ou potassium, le perfluoro-octanesulfate de sodium ou potassium, le 2,5-dichlorobenzènesulfate de sodium ou potassium, le 2,4,5-trichlorobenzènesulfate de sodium ou potassium, le méthylphosphonate de sodium ou potassium, le (2-phényl-éthylène)-phosphonate de sodium ou potassium, le pentachlorobenzoate de sodium ou potassium, le 2,4,6-trichlorobenzoate de sodium ou potassium, le 2,4-dichlorobenzoate de sodium ou potassium, le phénylphosphonate de lithium, le diphénylsulfonesulfonate de sodium ou potassium, le 2-formylbenzènesulfonate de sodium ou potassium, le (N-benzènesulfonyl)-benzènesulfonamidure de sodium ou potassium, l'hexafluoroaluminate trisodique ou tripotassique, l'hexafluorotitanate disodique ou dipotassique, l'hexafluorosilicate disodique ou dipotassique, l'hexafluorozirconate disodique ou dipotassique, le pyrophosphate de sodium ou potassium, le métaphosphate de sodium ou potassium, le tétrafluoroborate de sodium ou potassium, l'hexafluorophosphate de sodium ou potassium, le phosphate de sodium ou potassium ou lithium, le sel de potassium de N-(p-tolylsulfonyl)-p-toluènesulfinimide, le sel de potassium de N-(N'-benzylaminocarbonyl)-sulfanylimide.

8. Article revêtu selon la revendication 1, dans lequel l'agent ignifuge est choisi parmi au moins un du groupe constitué par le nonafluoro-1-butanesulfonate de potassium et le diphénylsulfone-sulfonate de sodium ou potassium.

9. Article revêtu selon la revendication 1, **caractérisé en ce qu'**une ou plusieurs couches de polyélectrolyte est/sont appliquée(s) sur le substrat.

10. Article revêtu selon la revendication 1, **caractérisé en ce que** pour ce qui est du substrat (S) il s'agit d'une plaque, d'un disque ou d'un film.

11. Article revêtu selon la revendication 1, dans lequel pour ce qui est du revêtement anti-rayure contenant de la silice, il s'agit d'un revêtement pouvant être obtenu à partir d'une laque hybride durcissable thermiquement.

12. Article revêtu selon la revendication 1, **caractérisé en ce qu'**il présente à une longueur d'onde de 550 nm une transmission, mesurée selon ASTM E 1348, d'au moins 88%, à une longueur d'onde de 700 nm une transmission, mesurée selon ASTM E 1348, d'au moins 90 % et dans l'essai d'abrasion mesuré selon DIN 53 754, des valeurs de moins de 15% Haze et dans l'essai de résistance à la propagation de flammes selon la norme UL 94 V, avec une probabilité de 70 %, une évaluation V1 - ou meilleure.

13. Procédé pour la fabrication d'un article revêtu selon la revendication 1, comportant les étapes de processus (i) production de la couche de substrat, (ii) en option l'enduction en une fois ou répétée plusieurs fois avec une couche de polyélectrolyte et (iii) enduction sur une face ou les deux faces avec un revêtement anti-rayure contenant de la silice.

14. Utilisation d'un article revêtu selon la revendication 1, pour la fabrication d'écrans plats ou de vitrages, en particulier de vitrages d'automobiles ou de bâtiments.

15. Écrans plats et vitrages contenant un article revêtu selon la revendication 1.
